(19) Europäisches Patentamt
European Patent Office
Office européen des brevets

(11) **EP 3 184 577 B1**

(12) **EUROPÄISCHE PATENTSCHRIFT**

(45) Veröffentlichungstag und Bekanntmachung des Hinweises auf die Patenterteilung:
**20.08.2025 Patentblatt 2025/34**

(21) Anmeldenummer: **15202255.4**

(22) Anmeldetag: **23.12.2015**

(51) Internationale Patentklassifikation (IPC):
**C08G 69/26** (2006.01)   **B65D 81/26** (2006.01)
**C09K 15/00** (2006.01)   **C08G 69/36** (2006.01)

(52) Gemeinsame Patentklassifikation (CPC):
**B65D 81/268; B29B 13/00; C08G 69/26;
C08G 69/265; C08G 69/36;** B65D 81/266;
B65D 81/267

(54) **VERFAHREN UND BEHÄLTER FÜR DIE LAGERUNG UND DEN TRANSPORT VON POLYAMIDGRANULATEN UND ENTSPRECHEND GELAGERTES ODER TRANSPORTIERTES POLYAMIDGRANULAT SOWIE HIERAUS HERGESTELLTE FORMKÖRPER**

METHOD AND CONTAINER FOR STORING AND TRANSPORTING POLYAMIDE PELLETS AND CORRESPONDINGLY STORED OR TRANSPORTED POLYAMIDE PELLETS AND SHAPED ARTICLES OBTAINED THEREFROM

PROCEDE ET CONTENEUR POUR LE STOCKAGE ET LE TRANSPORT DE GRANULES DE POLYAMIDE ET GRANULES DE POLYAMIDE AINSI TRANSPORTES OU STOCKES ET ARTICLES MOULES FABRIQUES A PARTIR DE CES DERNIERS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**28.06.2017 Patentblatt 2017/26**

(73) Patentinhaber: **EMS-CHEMIE AG**
**7013 Domat/Ems (CH)**

(72) Erfinder:
• **SÜTTERLIN, Martin**
**81379 München (DE)**
• **WIEDEMANN, Thomas**
**7013 Domat/EMS (CH)**
• **HEWEL, Manfred**
**7013 Domat/EMS (CH)**
• **BASS, Sepp**
**7013 Domat/EMS (CH)**

(74) Vertreter: **Pfenning, Meinig & Partner mbB
Patent- und Rechtsanwälte
Theresienhöhe 11a
80339 München (DE)**

(56) Entgegenhaltungen:
**EP-A- 1 186 552         EP-A1- 1 347 007
US-A- 5 977 212         US-A1- 2006 122 360
US-A1- 2009 171 038**

• **JANSSEN K ET AL: "Mechanistic aspects of the stabilization of polyamides by combinations of metal and halogen salts", POLYMER DEGRADATION AND STABILITY, BARKING, GB, vol. 49, no. 1, 1 January 1995 (1995-01-01), pages 127 - 133, XP027286620, ISSN: 0141-3910, [retrieved on 19950101]**
• **BASF: "Ultramid (PA) Product Brochure", 31 August 2013 (2013-08-31), XP093030539, Retrieved from the Internet <URL:https:// download.basf.com> [retrieved on 20230310]**

## Beschreibung

Die Erfindung betrifft ein Verfahren zur Lagerung und zum Transport von Polyamidgranulat, das mindestens ein amorphes oder mikrokristallines Polyamid enthält. Durch dieses neuartige Verfahren kann eine Vergilbung bei der Weiterverarbeitung zum Formkörper vermieden oder zumindest reduziert werden. Ebenso betrifft die Erfindung einen entsprechenden Behälter, in dem das Polyamidgranulat gelagert wird. Die Erfindung betrifft auch entsprechend gelagertes oder transportiertes Polyamidgranulat sowie hieraus hergestellte Formkörper.

Die Lagerung und der Transport von Polyamidgranulat vor der Weiterverarbeitung erfolgt in der Regel in Behältern unterschiedlichster Art, wie z. B. Säcken, Beuteln, Big Bags, Boxen, Octabins, Fässern, Eimern, Kanistern, oder Dosen.

Bekanntermaßen ist es bei der Lagerung oder dem Transport von Polyamidgranulat kritisch, dass häufig eine Vergilbung bei der Weiterverarbeitung derartiger Granulate beobachtet werden kann, obwohl die Granulate selbst nach der Lagerung keine Vergilbung zeigen. Es existiert zwar eine große Anzahl Wärmestabilisatoren für die Verwendung in Polyamiden, diese zeigen jedoch während der Lagerung oder dem Transport von Polyamidgranulat keine Wirkung.

Im Stand der Technik sind bislang Lösungen bekannt, die darauf basieren, den Kontakt zwischen den empfindlichen Produkten und der Umgebungsluft zu verhindern oder zumindest zu minimieren.

Aus dem Lebensmittelbereich ist es bekannt, Sauerstoffabsorber einzusetzen, um ein Verderben der Lebensmittel zu verhindern. Solch ein Ansatz ist z.B. aus EP 0864 630 A1 bekannt, in dem für die Konservierung von Lebensmitteln Verpackungen beschrieben werden, die kleine Beutel mit Sauerstoff absorbierenden Verbindungen enthalten.

EP 1 347 007 A1 betrifft ein Verfahren zur Festphasentrocknung oder Festphasenpolymerisation, wobei ein Polyamid welches 20 Tage oder länger nach seiner Herstellung gelagert wird, als Ausgangsmaterial für die Festphasentrocknung oder Festphasenpolymerisation dient.

EP 1 186 552 A1 beschreibt einen Verpackungsbehälter umfassend einen Artikelverpackungsbeutel, der aus einem Verpackungsmaterial hergestellt wurde, das eine hohe Feuchtigkeitspermeabilität und eine hohe Luftdurchlässigkeit zum Verpacken eines Feststoffs oder Pulvers aufweist, einen inneren Verpackungsbeutel, der aus einem Verpackungsmaterial hergestellt wurde, das mindestens eine geringe Feuchtigkeitspermeabilität und eine geringe Luftdurchlässigkeit zum Aufnehmen des Artikelverpackungsbeutels, ein Trockenmittel- oder einen Sauerstoffabsorber, der zwischen dem Artikelverpackungsbeutel und dem inneren Verpackungsbeutel angeordnet ist und einen äußeren Verpackungsbehälter zum Aufnehmen des inneren Verpackungsbeutels.

US, 5977,212 A betrifft eine Sauerstoff-fangende Zusammensetzung, die aus einem Träger und einem auf Ascorbat basierenden Mittel besteht. Das Mittel wurde in ein porösen, teilchenförmiges Material imprägniert, das über den gesamten Träger verteilt ist. Die Zusammensetzung ist in dem inneren Hohlraum eines Behälters enthalten, um Sauerstoff darin einzufangen. Ausgehend hiervon war es Aufgabe der vorliegenden Erfindung, verbesserte Lagerungs- bzw. Transportbedingungen für Polyamide zu ermöglichen, so dass ohne Zugabe von Additiven zum Polyamid eine möglichst vergilbungsfreie Weiterverarbeitung realisiert werden kann.

Diese Aufgabe wird durch das Verfahren mit den Merkmalen des Anspruchs 1 Die weiteren abhängigen Ansprüche zeigen vorteilhafte Weiterbildungen auf.

Erfindungsgemäß wird ein Verfahren zur Lagerung und zum Transport von Polyamidgranulat enthaltend mindestens ein amorphes oder mikrokristallines Polyamid unter Vermeidung oder Reduzierung der Vergilbung von aus dem Granulat hergestellten Formkörpern bereitgestellt, bei dem das Polyamidgranulat in einem Behälter mit einer Barrierewirkung gegenüber Sauerstoff und Feuchtigkeit aufbewahrt wird, in dem mindestens ein Sauerstoffabsorber enthalten ist, der im Behälter eine im Wesentlichen sauerstofffreie Atmosphäre erzeugt, die einen Kontakt des Granulats mit Sauerstoff aus der Umgebungsluft im Wesentlichen verhindert. Durch die Barrierewirkung des Behälters wird das Eindringen von zusätzlichem Sauerstoff und Feuchtigkeit aus der Umgebungsluft in den Behälter im Wesentlichen verhindert. Dies bedeutet, dass der Behälter gas- und feuchtigkeitsdicht ist.

Überraschenderweise konnte festgestellt werden, dass durch die Zugabe eines Sauerstoffabsorbers und die damit herstellbare im Wesentlichen sauerstofffreie Atmosphäre eine Lagerung und ein Transport von Polyamidgranulaten ermöglicht wird, der auch bei der weiteren Verarbeitung des Granulats zu keiner nennenswerten Vergilbung führt.

Als Sauerstoffabsorber kommen erfindungsgemäß sämtliche Verbindungen in Frage, die eine Absorption von Sauerstoff aus der Umgebungsluft ermöglichen.

In einer bevorzugten Ausführungsform ist vorgesehen, dass der Sauerstoffabsorber mindestens eine oxidierbare Metallverbindung aus der Gruppe der Metallpulver, Metalloxide, Metallsalze oder Mischungen hiervon ist.

Als oxidierbare Metallpulver sind insbesondere Pulver von Eisen, Zinn, Kupfer, Cobalt, Chrom, Mangan, Vanadium, Titan oder Mischungen hiervon bevorzugt. Als oxidierbare Metalloxide oder Metallsalze sind insbesondere Oxide oder Salze von Eisen, Kupfer, Cobalt, Chrom oder Mischungen hiervor bevorzugt.

Dabei ist es bevorzugt, dass die Menge der oxidierbaren Metallverbindungen im Behälter bevorzugt im Bereich von 20 bis 400 mmol, bevorzugt 30 bis 300 mmol, besonders bevorzugt 40 bis 200 mmol pro Liter Restvolumen liegt. Unter Restvolumen ist hier das nicht durch das Polyamidgranulat eingenommene Volumen des Behälters gemeint.

Um ihre Wirkung als Sauerstoffabsorber zu steigern, können die oxidierbaren Metallpulver, oxidierbaren Metalloxide oder oxidierbaren Metallsalze vorzugsweise mit Oxidationskatalysatoren kombiniert werden. Die Oxidationskatalysatoren für oxidierbare Metallpulver, oxidierbare Metalloxide oder oxidierbare Metallsalze sind Halogenide von Alkalimetallen, Erdalkalimetallen oder Mischungen davon. Bevorzugt sind die Halogenide ausgewählt aus der Gruppe bestehend aus Chlor, Brom und Jod. Besonders bevorzugt sind die Halogenide ausgewählt aus der Gruppe bestehend aus Chlor und Jod. Bevorzugt sind die Alkali- oder Erdalkalimetalle ausgewählt aus der Gruppe bestehend aus Natrium, Kalium, Calcium, Magnesium und Barium. Besonders bevorzugt sind die Alkali- oder Erdalkalimetalle ausgewählt aus der Gruppe bestehend aus Natrium, Kalium und Calcium.

Die Oxidationskatalysatoren für oxidierbare Metallpulver, oxidierbare Metalloxide oder oxidierbare Metallsalze werden vorzugsweise in Mengen von 0.05 bis 35 Gew.-%, bevorzugt 0.1 bis 17 Gew.-%, besonders bevorzugt 0.5 bis 10 Gew.-%, bezogen auf das oxidierbare Metallpulver, das oxidierbare Metalloxid oder das oxidierbare Metallsalz, zugegeben.

Den Systemen enthaltend oxidierbare Metallpulver und Oxidationskatalysator, oxidierbare Metalloxide und Oxidationskatalysator oder oxidierbare Metallsalze und Oxidationskatalysator kann gegebenenfalls eine befeuchtende Substanz zugegeben werden. Die befeuchtende Substanz ist ausgewählt aus der Gruppe bestehend aus Aktivkohle, Silicaten, Zeolithen, Molekularsieben, Hydrogelen, Perliten und Kieselgur.

Eine weitere bevorzugte Ausführungsform sieht vor, dass der Sauerstoffabsorber eine oxidierbare organische oder anorganische Verbindung oder ein Enzym ist. Als oxidierbare organische Verbindung sind Ascorbinsäure, Isoascorbinsäure, Brenzcatechin, Hydrochinon, ungesättigte Carbonsäuren, Derivate ungesättigter Carbonsäuren (z.B. Ester) oder Mischungen hiervon bevorzugt. Als oxidierbare anorganische Verbindungen sind Sulfite (z.B. $CaSO_3$), Dithionite (z.B. Natriumdithionit, Zinkdithionit) oder Mischungen hiervon bevorzugt.

Die als Sauerstoffabsorber eingesetzten oxidierbaren Metallverbindungen, oxidierbaren organischen oder anorganischen Verbindungen werden vorzugsweise in Sachets abgefüllt, wobei die Sachets vorzugsweise aus Sauerstoff durchlässigen Materialien bestehen, insbesondere aus Papier, Polyolefinen, Stoff, Filterpapier, Textilmembranen, mit Löchern bzw. Mikroporen versehenen Materialien oder Kombinationen davon.

Eine weitere bevorzugte Ausführungsform sieht vor, dass der Sauerstoffabsorber ein oxidierbares Polymer ist.

Das oxidierbare Polymer ist bevorzugt ausgewählt aus der Gruppe bestehend aus

- olefinischen Polymeren mit aliphatischen Kohlenstoff-Kohlenstoff-Doppelbindungen in der Hauptkette oder der Seitenkette, enthaltend lineare oder cyclische Polyene mit konjugierten oder unkonjugierten Doppelbindungen,
- olefinischen Polymeren mit tertiären Kohlenstoffatomen in der Hauptkette,
- Polymeren enthaltend aktivierte Methylengruppen in der Hauptkette
  und
- Polymeren enthaltend Aldehydgruppen.

Bevorzugte olefinische Polymere mit aliphatischen Kohlenstoff-KohlenstoffDoppelbindungen in der Hauptkette oder der Seitenkette, enthaltend lineare oder cyclische Polyene mit konjugierten oder unkonjugierten Doppelbindungen sind Polybutadien, Polyisopren, Ethylen-Propylen-Dien-Copolymere, Polyterpene, Dicyclopentadien enthaltende Polymere oder Polymere enthaltend mehrfach ungesättigte Norbornenderivate, wie z.B: Vinylnorbornen, Ethylidennorbornen, Isopropylidennorbornen oder Diisopropylidennorbornen enthalten.

Bevorzugte olefinische Polymere mit tertiären Kohlenstoffatomen in der Hauptkette sind Polymere gebildet aus α-Olefinen mit 3 bis 20, bevorzugt 3 bis 10 Kohlenstoffatomen oder Polymere oder Copolymere mit Benzolringen in den Seitenketten. Besonders bevorzugte olefinische Polymere oder Copolymere mit tertiären Kohlenstoffatomen in der Hauptkette sind Polypropylen, Poly-1-buten, Poly-1-hexen, Poly-1-octen, Ethylen-Propylen-Copolymer, Ethylen-Buten-1-Copolymer, Ethylen-Propylen-Buten-1-Copolymer, Polystyrol, Styrol-Butadien-Copolymer oder Styrol-Isopren-Copolymer.

Bevorzugte Polymere enthaltend aktivierte Methylengruppen in der Hauptkette sind Polyamide oder Olefin-Kohlenmonoxid-Copolymere. Unter den Polyamiden sind Polyamide enthaltend m-Xylylendiamin, p-Xylylendiamin oder Mischungen davon bevorzugt. Besonders bevorzugte Polyamide sind PA MXD6, PA MXD10, PA MXD9, PA MXD7, PA MXD6/MXDI oder Mischungen oder Copolymere davon, wobei das MXD ganz oder teilweise durch PXD ersetzt sein kann und wobei auch Lactame oder ω-Aminosäuren mit 4 bis 12 Kohlenstoffatomen als Comonomere enthalten sein können. Der mögliche Anteil an Lactamen oder ω-Aminosäuren beträgt maximal 30 Mol-%, bezogen auf 100 Mol-% für das gesamte Polyamid. Ganz besonders bevorzugt sind die Polyamide frei von Lactamen oder ω-Aminosäuren. Der Anteil der Isophthalsäure im Polyamid PA MXD6/MXDI beträgt bevorzugt 2 bis 15 Mol-%, besonders bevorzugt 2 bis 12 Mol-%, ganz besonders bevorzugt 2 bis 8 Mol-%, wobei die Summe der beiden Dicarbonsäuren 100 Mol-% ergibt.

Bevorzugte Polymere, enthaltend Aldehydgruppen sind Polymere enthaltend Acrolein, Methacrolein oder deren Mischungen als Monomer oder sind Copolymere dieser Monomere oder Monomermischungen mit Styrol.

Um ihre Wirkung als Sauerstoffabsorber entfalten zu können, müssen die oxidierbaren Polymere mit Oxidationskatalysatoren kombiniert werden. Die Oxidationskatalysatoren für oxidierbare Polymere werden in Mengen von 0.001 bis 3 Gew.-%, bevorzugt 0.005 bis 1 Gew.-%, besonders bevorzugt 0.01 bis 0.5 Gew.-%, ganz besonders bevorzugt 0.03 bis 0.15 Gew.-%, bezogen auf das oxidierbare Polymer, zugegeben.

Die Oxidationskatalysatoren für oxidierbare Polymere sind Verbindungen der Übergangsmetalle. Die Verbindungen der Übergangsmetalle sind bevorzugt ausgewählt aus der Gruppe bestehend aus Halogeniden, Sulfaten, Nitraten, Phosphaten, Silicaten, Komplexsalzen, Sulfonsäuresalzen, Phosphonsäuresalzen und Carbonsäuresalzen. Die für die Carbonsäuresalze verwendeten Carbonsäuren sind linear oder verzweigt. Bevorzugt besitzen die Carbonsäuren 2 bis 22 Kohlenstoffatome. Besonders bevorzugte Carbonsäuren sind Neodecansäure oder Stearinsäure.

Die Übergangsmetalle sind ausgewählt aus der Gruppe bestehend aus Eisen, Cobalt, Nickel, Kupfer, Silber, Zink, Zinn, Titan, Zirkonium, Vanadium, Chrom und Mangan. Bevorzugt sind die Übergangsmetalle ausgewählt aus der Gruppe bestehend aus Eisen, Cobalt, Nickel, Kupfer, Zink, Chrom und Mangan. Besonders bevorzugt sind die Übergangsmetalle ausgewählt aus der Gruppe bestehend aus Cobalt, Kupfer, Zink und Mangan. Ganz besonders bevorzugt ist das Übergangsmetall Cobalt.

Besonders bevorzugte Oxidationskatalysatoren für oxidierbare Polymere sind die Carbonsäuresalze der Übergangsmetalle. Ganz besonders bevorzugte Oxidationskatalysatoren für oxidierbare Polymere sind die Carbonsäuresalze des Cobalts.

Eine besonders bevorzugte Ausführungsform sieht vor, dass der Sauerstoffabsorber ausgewählt ist aus der Gruppe bestehend aus oxidierbaren Metallpulvern und oxidierbaren Polymeren.

Erfindungsgemäß wird ein Behälter mit einer Barrierewirkung gegenüber Sauerstoff und Feuchtigkeit verwendet, wodurch das Eindringen von zusätzlichem Sauerstoff und Feuchtigkeit aus der Umgebungsluft in den Behälter im Wesentlichen verhindert wird. Dabei kann der Behälter mindestens eine Barriereschicht enthalten, die insbesondere ausgewählt ist aus der Gruppe bestehend aus Metall, Aluminium, Ethylen-Vinylalkohol-Copolymere (EVOH), Polyvinylidenchlorid (PVDC), Polyvinylchlorid (PVC), Polyolefinen, Polyethylen und Kombinationen davon.

Im Folgenden werden die zu lagernden oder transportierenden Polyamide näher spezifiziert.

Die Schreibweisen und Abkürzungen für Polyamide und deren Monomere sind in der ISO-Norm 16396-1:2015 festgelegt. So werden unter anderen folgende Abkürzungen für aromatische oder nichtlineare aliphatische Monomere verwendet:
Bei den Diaminen steht MXD für m-Xylylendiamin, PXD für p-Xylylendiamin, MACM für 3,3'-Dimethyl-4,4'-diaminodicyclohexylmethan, PACM für Bis(p-aminocyclohexyl)methan, TMDC für 3,5,3',5'-Tetramethyl-4,4'-diaminodicyclohexylmethan, ND für 1,6-Diamino-2,2,4-Trimethylhexan und IND für 1,6-Diamino-2,4,4-Trimethylhexan.

Bei den Dicarbonsäuren steht T für Terephthalsäure, I für Isophthalsäure und N für Naphthalindicarbonsäure.

Enthalten die Polyamide nur Dicarbonsäuren und Diamine so ergänzen sich deren molare Mengen auf 50 Mol-% für die Summe aller Diamine und 50 Mol-% für die Summe aller Dicarbonsäuren und die Summe der Diamin- und Dicarbonsäure-Mengen ergibt 100 Mol-% für das Polyamid.

Enthalten die Polyamide neben Dicarbonsäuren und Diaminen auch Lactame oder ω-Aminosäuren zu X Mol-%, so beträgt die Summe aller Diamine nur noch (50 - 0,5 X) Mol-% und die Summe aller Dicarbonsäuren (50 - 0,5 X) Mol-%, bezogen auf 100 Mol-% Polyamid.

Die Mengenangaben bezüglich der Monomere sind dabei so zu verstehen, dass sich ein entsprechendes Molverhältnis dieser bei der Polykondensation eingesetzten Monomere auch in den derart durch Polykondensation hergestellten Polyamiden wiederfindet.

Bei den Mengenangaben zu den Dicarbonsäuren und Diaminen der Polyamide gilt, dass die Summe der molaren Mengen aller Diamine im Wesentlichen gleich der Summe der molaren Mengen aller Dicarbonsäuren ist. Im Wesentlichen gleich bedeutet dabei einen maximalen Überschuss der Dicarbonsäuren oder der Diamine von 5 %, d.h. das molare Verhältnis von Dicarbonsäuren zu Diaminen beträgt 1,05 : 1 bis 1 : 1,05. Bevorzugt ist ein maximaler Überschuss der Dicarbonsäuren oder der Diamine von 2 %, d.h. das molare Verhältnis von Dicarbonsäuren zu Diaminen beträgt 1,02 : 1 bis 1 : 1,02.

Das Polyamidgranulat ist mit mindestens einem amorphen oder mikrokristallinen Polyamid oder Mischungen von mindestens einem amorphen oder mikrokristallinen Polyamid mit mindestens einem teilkristallinen Polyamid und/oder mit mindestens einem Schlagzähmodifikator hergestellt.

Die Mischungen können als physikalische Mischungen oder als extrudierte bzw. compoundierte Mischungen vorliegen.

Die amorphen oder mikrokristallinen Polyamide zeigen in der dynamischen Differenz-Kalorimetrie (engl. Differential Scanning Calorimetry, DSC) nach ISO 11357 bei einer Aufheizrate von 20 K/min bevorzugt eine Schmelzwärme von maximal 30 J/g, bevorzugt von maximal 25 J/g, besonders bevorzugt 0 bis 22 J/g.

Die amorphen Polyamide weisen, verglichen mit den mikrokristallinen Polyamiden eine noch geringere Schmelzwärme auf. Die amorphen Polyamide zeigen in der dynamischen Differenz-Kalorimetrie (engl. Differential Scanning Calorimetry, DSC) nach ISO 11357 bei einer Aufheizrate von 20 K/min bevorzugt eine Schmelzwärme von maximal 5 J/g, bevorzugt von maximal 3 J/g, besonders bevorzugt von 0 bis 1 J/g.

Amorphe Polyamide besitzen aufgrund ihrer Amorphizität keinen Schmelzpunkt.

Mikrokristalline Polyamide sind teilkristalline Polyamide und besitzen daher einen Schmelzpunkt. Ihr Schmelzpunkt beträgt bevorzugt maximal 260 °C, gemessen nach ISO 11537. Sie haben eine Morphologie, bei der die Kristallite eine so kleine Dimension haben, so dass eine daraus hergestellte Platte mit einer Dicke von 2 mm noch transparent ist, d.h. ihre Lichttransmission mindestens 75 % beträgt, gemessen nach ASTM D 1003.

Hinsichtlich des mindestens einen amorphen oder mikrokristallinen Polyamids besteht keinerlei Beschränkung. Vorzugsweise ist das amorphe oder mikrokristalline Polyamid ausgewählt aus der Gruppe bestehend aus amorphen oder mikrokristallinen Polyamiden mit einer Glasübergangstemperatur (gemessen nach ISO 11357) von 40 bis 225 °C, bevorzugt von 60 bis 215 °C, besonders bevorzugt von 105 bis 210 °C, ganz besonders bevorzugt von 130 bis 205 °C.

Das amorphe oder mikrokristalline Polyamid ist vorzugsweise aus mindestens einem Diamin und mindestens einer Dicarbonsäure und gegebenenfalls aus mindestens einem Lactam und/oder mindestens einer ω-Aminosäure gebildet.

Bevorzugt ist das mindestens eine Diamin ausgewählt aus einer Gruppe bestehend aus Ethylendiamin, Butandiamin, Pentandiamin, Methylpentandiamin, Hexamethylendiamin, Octandiamin, Methyloctandiamin, Nonandiamin, Decandiamin, Undecandiamin, Dodecandiamin, Diaminotrimethylhexan, Bis(aminocyclohexyl)methan und seinen Alkylderivaten, Bis(aminocyclohexyl)propan und seinen Alkylderivaten, Isophorondiamin, Norbornandiamin, Bis(aminomethyl)norbornan, Xylylendiamin, Cyclohexandiamin und Bis(aminomethyl)cyclohexan und seinen Alkylderivaten.

Bevorzugt ist die mindestens eine Dicarbonsäure ausgewählt aus einer Gruppe bestehend aus Bernsteinsäure, Glutarsäure, Adipinsäure, Pimelinsäure, Korksäure, Azelainsäure, Sebazinsäure, Undecandisäure, Dodecandisäure, Brassylsäure, Tetradecandisäure, Pentadecandisäure, Hexadecandisäure, Heptadecandisäure, Octadecandisäure, Nonadecandisäure, Eicosandisäure, Japansäure, Cyclohexandicarbonsäure, Phenylindandicarbonsäure, Phenylendioxydiessigsäure, Dimerfettsäure mit 36 oder 44 C-Atomen, Isophthalsäure, Terephthalsäure und Naphthalindicarbonsäure.

Bevorzugt ist das mindestens eine Lactam oder die mindestens eine ω-Aminosäure ausgewählt aus der Gruppe bestehend aus den Lactamen mit 4 bis 15 C-Atomen und aus den ω-Aminosäuren mit 4 bis 15 C-Atomen.

Besonders bevorzugt ist das mindestens eine Diamin ausgewählt aus der Gruppe bestehend aus Hexamethylendiamin, 1,6-Diamino-2,2,4-Trimethylhexan, 1,6-Diamino-2,4,4-Trimethylhexan, 2-Methyl-1,5-pentandiamin, 3,3'-Dimethyl-4,4'-diaminodicyclohexylmethan, Bis(p-aminocyclohexyl)methan, 3,3'-Diethyl-4,4'-diaminodicyclohexylmethan, 3,5,3',5'-Tetramethyl-4,4'-diaminodicyclohexylmethan, 2,2-Bis(p-aminodicyclohexyl)propan, Isophorondiamin, Norbornandiamin, m-Xylylendiamin, p-Xylylendiamin und 1,3-Bis(aminomethyl)cyclohexan.

Besonders bevorzugt ist die mindestens eine Dicarbonsäure ausgewählt aus der Gruppe bestehend aus 1,6-Hexan-disäure, 1,9-Nonandisäure, 1,10-Decandisäure, 1,12-Dodecandisäure, 1,13-Tridecandisäure, 1,14-Tetradecandisäure, 1,15-Pentadecansäure, 1,16-Hexadecandisäure, 1,18-Octadecandisäure, 1,3-Cyclohexandicarbonsäure, 1,4-Cyclohexandicarbonsäure, Phenylindandicarbonsäure, 1,4-Phenylendioxydiessigsäure, 1,3-Phenylendioxydiessigsäure, Dimerfettsäure mit 36 oder 44 C-Atomen, Isophthalsäure, Terephthalsäure und 2,6-Naphthalindicarbonsäure.

Besonders bevorzugte Lactame sind Lactame oder ω-Aminosäuren mit 4, 6, 7, 8, 11 oder 12 C-Atomen. Diese sind ausgewählt aus der Gruppe bestehend Pyrrolidin-2-on (4 C-Atome), ε-Caprolactam (6 C-Atome), Önanthlactam (7 C-Atome), Capryllactam (8 C-Atome), Laurinlactam (12 C-Atome), 4-Aminobutansäure, 6-Aminohexansäure, 7-Aminoheptansäure, 8-Aminooctansäure, 11-Aminoundecansäure und 12-Aminododecansäure.

Ganz besonders bevorzugt sind die Lactame oder ω-Aminosäuren ausgewählt aus der Gruppe bestehend aus ε-Caprolactam (6 C-Atome), Laurinlactam (12 C-Atome), 6-Aminohexansäure und 12-Aminododecansäure.

Bevorzugt ist das amorphe oder mikrokristalline Polyamid aus mindestens einem Diamin und mindestens einer Dicarbonsäure und gegebenenfalls aus mindestens einem Lactam und/oder mindestens einer ω-Aminosäure gebildet und enthält mindestens ein cycloaliphatisches Diamin oder mindestens ein aliphatisches Diamin mit einem aromatischen Strukturbestandteil oder mindestens eine aromatische Dicarbonsäure.

Bevorzugt ist das mindestens eine cycloaliphatische Diamin oder das mindestens eine aliphatische Diamin mit einem aromatischen Strukturbestandteil ausgewählt aus der Gruppe bestehend aus Bis(aminocyclohexyl)methan und seinen Alkylderivaten, Bis(aminocyclohexyl)propan und seinen Alkylderivaten, Isophorondiamin, Norbornandiamin, Bis(aminomethyl)norbornan, Xylylendiamin, Cyclohexandiamin, Bis(aminomethyl)cyclohexan und seinen Alkylderivaten.

Insbesondere ist es bevorzugt, wenn die amorphen oder mikrokristallinen Polyamide ausgewählt sind aus der Gruppe bestehend aus PA 6I, PA 6I/6T, PA 6I/6T/6N, PA MXDI/6I, PA MXDI/MXDT/6I/6T, PA MXDI/12I, PA MXDI, PA MXDI/MXD6, PA MACM10, PA MACM12, PA MACM14, PA MACM18, PA NDT/INDT, PA TMDC10, PA TMDC12, PA TMDC14, PA TMDC18, PA PACM12, PA PACM14, PA PACM18, PA PACM10/11, PA PACM10/12, PA PACM12/612, PA PACM12/PACM14/612/614, PA MACMI/12, PA MACMT/12, PA MACMI/MACM12, PA MACMI/MACMN, PA MACMT/-MACM12, PA MACMT/MACMN, PA MACM36, PA TMDC36, PA MACMI/MACM36, PA 6I/MACMI/12, PA MACMT/-MACM36, PA MACMI/MACMT/12, PA 6I/6T/MACMI/MACMT, PA 6I/6T/MACMI/MACMT/12, PA MACM6/11, PA MACM6/12, PA MACM10/11, PA MACM10/12, PA MACM10 /1010, PA MACM12/1012, PA MACM12/1212, PA MACM14/1014, PA MACM14/1214, PA MACM18/1018, PA 6I/6T/MACMI/MACMT/MACM12/612, PA 6I/6T/MACMI/-MACMT/MACM12, PA MACMI/MACMT/MACM12/12, PA MACMI/MACMT/MACM12, PA 6I/6T/MACMI/MACMT/12, PA 6I/6T/6N/MACMI/MACMT/MACMN, PA TMDC12/TMDCT/TMDC36, PA TMDC12/TMDCI, PA TMDC12/TMDCI/TMDC36 und PA TMDC12/TMDCT und Mischungen oder Copolymeren hiervon, wobei das MACM bis zu maximal 35 Mol-% durch PACM und/oder TMDC ersetzt sein kann, bezogen auf die Summe der molaren Anteile aller Monomere von 100 Mol-% und/oder das Laurinlactam ganz oder teilweise durch Caprolactam ersetzt sein kann.

Bezüglich des Naphthalindicarbonsäuregehalts ist eine Menge von maximal 10 Mol-%, bezogen auf die Summe der molaren Anteile aller Monomere von 100 Mol-%, bevorzugt.

Der Lactam- und/oder ω-Aminosäuregehalt des amorphen oder mikrokristallinen Polyamids beträgt 0 bis 40 Mol-%, bevorzugt 0 bis 35 Mol-%, bezogen auf die Summe der molaren Anteile aller Monomere von 100 Mol-%.

Das amorphe oder mikrokristalline Polyamid ist besonders bevorzugt ausgewählt aus der Gruppe bestehend aus PA 6I/6T, PA MXDI/6I, PA MXDI/MXD6, PA MACM10, PA MACM12, PA MACM14, PA MACM18, PA MACM36, PA TMDC10, PA TMDC12, PA TMDC14, PA TMDC18, PA PACM12, PA PACM14, PA PACM18, PA NDT/INDT, PA PACM10/11, PA PACM10/12, PA PACM12/612, PA PACM12/PACM14/612/614, PA MACMI/12, PA MACMT/12, PA MACMI/MACM12, PA MACMT/MACM12, PA MACMI/MACMT/12, PA MACMI/MACMT/MACM12/12, PA MACMI/-MACMT/MACM12, PA 6I/6T/MACMI/MACMT, PA 6I/6T/MACMI/ MACMT/12, PA 6I/6T/MACMI/MACMT/MACM12/12, PA 6I/6T/MACMI/ MACMT/MACM12, PA MACM6/11, PA MACM6/12, PA MACM10/11, PA MACM10/12, PA MACM10/1010, PA MACM12/1012, PA MACM12/1212, PA MACM14/1014, PA MACM14/1214, PA MACM10/PACM10, PA MACM12/PACM12, PA MACM14/PACM14, PA MACM18/PACM18, PA 6I/6T/MACMI/MACMT/PACMI/PACMT/12, PA 6I/6T/MACMI/MACMT/MACM12/PACMI/PACMT/PACM12 und Mischungen oder Copolymeren hiervon.

Das amorphe oder mikrokristalline Polyamid ist ganz besonders bevorzugt ausgewählt aus der Gruppe bestehend aus PA MXDI/6I, PA MXDI/MXD6, PA MACM10, PA MACM12, PA MACM14, PA MACM18, PA TMDC10, PA TMDC12, PA PACM12, PA PACM14, PA PACM18, PA NDT/INDT, PA PACM12/612, PA PACM12/PACM14/612/614, PA MACMI/12, PA MACMT/12, PA MACMI/MACM12, PA MACMI/MACMT/12, PA MACMI/MACMT/MACM12, PA 6I/6T/MACMI/MACMT/12, PA MACM10/1010, PA MACM12/1012, PA MACM12/1212, PA MACM14/1014, PA MACM14/1214, PA MACM10/PACM10, PA MACM12/PACM12, PA MACM14/PACM14, PA MACM18/PACM18 und PA 6I/6T/MACMI/MACMT/PACMI/PACMT/12.

Der Anteil des 1,6-Hexandiamins im PA MXDI/6I beträgt bevorzugt 15 bis 40 Mol-%, besonders bevorzugt 20 bis 35 Mol-%, wobei die Summe der molaren Anteile aller Monomere 100 Mol-% ergibt. Insbesondere bevorzugt besitzt das PA MXDI/6I das Molverhältnis 46/54.

Der Anteil des 1,6-Hexandiamins im PA PACM12/612 beträgt bevorzugt 2 bis 24 Mol-%, besonders bevorzugt 6 bis 15 Mol-%, wobei die Summe der molaren Anteile aller Monomere 100 Mol-% ergibt.

Der Anteil des 1,6-Hexandiamins im PA PACM12/PACM14/612/614 beträgt bevorzugt 2 bis 24 Mol-%, besonders bevorzugt 6 bis 15 Mol-%, wobei die Summe der molaren Anteile aller Monomere 100 Mol-% ergibt. Der Anteil der 1,14-Tetradecandisäure im PA PACM12/PACM14/612/614 beträgt bevorzugt 2 bis 24 Mol-%, besonders bevorzugt 6 bis 15 Mol-%, wobei die Summe der molaren Anteile aller Monomere 100 Mol-% ergibt.

Unter den PA MACMI/12 sind diejenigen mit einem Anteil an Laurinlaktam von 15 bis 50 Mol-% bevorzugt, wobei die Summe der molaren Anteile aller Monomere 100 Mol-% ergibt. Besonders bevorzugt sind PA MACMI/12 mit einem Anteil an Laurinlaktam von 20 bis 40 Mol-%. Insbesondere bevorzugt sind PA MACMI/12 mit einem Anteil an Laurinlaktam von 19 Mol-% oder 35 Mol-%.

Unter den PA MACMI/MACMT/12 sind diejenigen mit equimolarem Verhältnis Isophthalsäure zu Terephthalsäure und einem Anteil an Laurinlaktam von 15 bis 40 Mol-% bevorzugt, wobei die Summe der molaren Anteile aller Monomere 100 Mol-% ergibt. Besonders bevorzugt besitzen die PA MACMI/MACMT/12 ein equimolares Verhältnis Isophthalsäure zu Terephthalsäure und einem Anteil an Laurinlaktam von 20 bis 30 Mol-%. Insbesondere bevorzugt besitzt das PA MACMI/MACMT/12 das Molverhältnis 38/38/24.

Unter den PA MACMI/MACMT/MACM12 sind diejenigen mit äquimolarem Verhältnis Isophthalsäure zu Terephthalsäure und einem Anteil an Dodecandisäure von 30 bis 60 Mol-% bevorzugt, wobei die Summe der molaren Anteile aller Monomere 100 Mol-% ergibt. Besonders bevorzugt besitzen die PA MACMI/MACMT/MACM12 ein äquimolares Verhältnis Isophthalsäure zu Terephthalsäure und einen Anteil an Dodecandisäure von 40 bis 50 Mol-%. Insbesondere bevorzugt besitzt das PA MACMI/MACMT/MACM12 das Molverhältnis 27/27/46.

Unter den PA 6I/6T/MACMI/MACMT/12 sind diejenigen mit equimolarem Verhältnis Isophthalsäure zu Terephthalsäure und einem Anteil an Laurinlactam von 1 bis 25 Mol-% bevorzugt, wobei die Summe der molaren Anteile aller Monomere 100 Mol-% ergibt. Besonders bevorzugt besitzen die PA 6I/6T/MACMI/MACMT/12 ein äquimolares Verhältnis Isophthalsäure zu Terephthalsäure und einem Anteil an Laurinlactam von 2 bis 15 Mol-%. Insbesondere bevorzugt besitzt das PA 6I/6T/MACMI/MACMT/12 das Molverhältnis 34/34/14/14/4.

Der Anteil des linear aliphatischen Diamins im PA MACM10/1010, PA MACM12/1012, PA MACM12/1212, PA MACM14/1014, PA MACM14/1214 beträgt bevorzugt 5 bis 45 Mol-%, besonders bevorzugt 8 bis 27 Mol-%, ganz besonders bevorzugt 10 bis 22 Mol-%, wobei die Summe der molaren Anteile aller Monomere 100 Mol-% ergibt.

Der Anteil des PACM im PA MACM10/PACM10, PA MACM12/PACM12, PA MACM14/PACM14 oder PA MACM18/PACM18 beträgt bevorzugt 1 bis 35 Mol-%, besonders bevorzugt 2 bis 25 Mol-%, wobei die Summe der molaren Anteile aller Monomere 100 Mol-% ergibt.

Unter den PA 6I/6T/MACMI/MACMT/PACMI/PACMT/12 sind diejenigen mit äquimolarem Verhältnis Isophthalsäure zu Terephthalsäure und einem Anteil an Laurinlactam von 1 bis 25 Mol-% bevorzugt, wobei die Summe der molaren Anteile aller Monomere 100 Mol-% ergibt. Besonders bevorzugt besitzen die PA 6I/6T/MACMI/MACMT/PACMI/-PACMT/12 ein äquimolares Verhältnis Isophthalsäure zu Terephthalsäure und einem Anteil an Laurinlactam von 2 bis 15 Mol-%. Insbesondere bevorzugt besitzen die PA 6I/6T/MACMI/MACMT/ PACMI/PACMT /12 ein äquimolares Verhältnis Isophthalsäure zu Terephthalsäure, einen Anteil an PACM von 2 bis 7 Mol-% und einen Anteil an Laurinlactam von 2 bis 7 Mol-%.

Das Polyamidgranulat zeigt eine Lichttransmission gemessen nach ASTM D 1003 an Platten der Dicke 2 mm (hergestellt in einem hochglanzpolierten Werkzeug) von mindestens 75 %, bevorzugt von mindestens 83 %, besonders bevorzugt von mindestens 88 % sowie ganz besonders bevorzugt von mindestens 90 %.

In Mischungen aus amorphen oder mikrokristallinen und mindestens einem teilkristallinen aliphatischen Polyamid beträgt der Anteil an teilkristallinem aliphatischen Polyamid 2 bis 40 Gew.-%, bevorzugt 3 bis 30 Gew.-%, besonders bevorzugt 10 bis 20 Gew.-%.

Das mindestens eine teilkristalline aliphatische Polyamid als Mischungskomponente für die amorphen oder mikrokristallinen Polyamide ist bevorzugt ausgewählt aus der Gruppe bestehend aus PA 6, PA 46, PA 49, PA 410, PA 411, PA 412, PA 413, PA 414, PA 415, PA 416, PA 418, PA 436, PA 66, PA 69, PA 610, PA 611, PA 612, PA 613, PA 614, PA 615, PA 616, PA 617, PA 618, PA 1010, PA 66/6, PA 6/66/12, PA 6/12, PA 11, PA 12, PA 912, PA 1212, PA MXD6, PA MXD9, PA MXD10, PA MXD11, PA MXD12, PA MXD13, PA MXD14, PA MXD15, PA MXD16, PA MXD17, PA MXD18, PA MXD36, PA PACM9, PA PACM10, PA PACM11, PA PACM12, PA PACM13, PA PACM14, PA PACM15, PA PACM16, PA PACM17, PA PACM18, PA PACM36, Polyetheramiden, Polyetheresteramiden, Polyesteramiden und deren Mischungen oder Copolymere.

Besonders bevorzugt ist das teilkristalline aliphatische Polyamid ausgewählt aus der Gruppe bestehend aus PA 6, PA 69, PA 610, PA 612, PA 614, PA 1010, PA 1212, PA 6/66/12, PA 6/66, PA 6/12, PA 11, PA 12, Polyetheramide und Polyetheresteramide.

In Mischungen aus amorphen oder mikrokristallinen Polyamiden und mindestens einem Schlagzähmodifikator beträgt der Anteil an Schlagzähmodifikator 2 bis 14 Gew.-%, bevorzugt 4 bis 12 Gew.-%.

Der mindestens eine Schlagzähmodifikator als Mischungskomponente für die amorphen oder mikrokristallinen Polyamide ist bevorzugt ausgewählt aus der Gruppe bestehend aus Acrylat-Copolymeren, Acrylsäure-Copolymeren, Vinylacetat-Copolymeren, Styrol-Copolymeren, Styrol-Blockcopolymeren, Kern-Mantel-Schlagzähmodifikatoren und Mischungen davon.

Besonders bevorzugt ist der Schlagzähmodifikator ausgewählt aus der Gruppe bestehend aus Ethylen-Glycidylmethacrylat-Copolymeren, Ethylen-Acrylat-Copolymeren, Styrol-Butadien-Styrol-Triblockcopolymeren (SBS), Styrol-Ethylen/Butylen-Styrol-Triblockcopolymer (SEBS), Methacrylat-Butadien-Styrol-Kern-Mantel-Schlagzähmodifikatoren und deren Mischungen.

Der mindestens eine Schlagzähmodifikator ist vorzugsweise funktionalisiert, entweder durch Copolymerisation oder durch Pfropfen mit ungesättigten Carbonsäuren, ungesättigten Carbonsäurederivaten und/oder ungesättigten Glycidylverbindungen.

Die relative Viskosität (RV) der amorphen oder mikrokristallinen Polyamide beträgt vorzugsweise 1,35 bis 2,15, bevorzugt 1,40 bis 1,85, besonders bevorzugt 1,45 bis 1,75 beträgt, gemessen mit 0,5 g in 100 ml m-Kresol bei 20°C. Die relative Viskosität (RV) der teilkristallinen aliphatischen Polyamide beträgt vorzugsweise 1,40 bis 2,15, bevorzugt 1,45 bis 2,0, besonders bevorzugt 1,50 bis 1,90 gemessen mit 0,5 g in 100 ml m-Kresol bei 20 °C.

Die Polyamidgranulate können zusätzlich weitere Additive enthalten, insbesondere ausgewählt aus der Gruppe bestehend aus Kondensationskatalysatoren, Kettenreglern, Entschäumern, anorganischen Stabilisatoren, organischen Stabilisatoren, Gleitmitteln, Farbstoffen, Markierungsmitteln, Pigmenten, Farbstoffen, Nukleierungsmitteln, Kristallisationsverzögerern, Antistatika, Entformungsmitteln, optischen Aufhellern, natürlichen Schichtsilikaten, synthetischen Schichtsilikaten und deren Mischungen.

Als Stabilisatoren bzw. Alterungsschutzmittel können in den amorphen oder mikrokristallinen Polyamiden, z.B. Antioxidantien, Antiozonantien, Lichtschutzmittel, UV-Stabilisatoren, UV-Absorber oder UV-Blocker eingesetzt werden.

Die weiteren Additive können vorzugsweise in einer Menge von 0,01 bis 6 Gew.-%, bezogen auf die gesamte Polyamidformmasse, enthalten sein.

Es wird ebenso ein Behälter für die Lagerung und den Transport von Polyamidgranulaten, enthaltend mindestens ein amorphes oder mikrokristallines Polyamid beschrieben. Dieser Behälter enthält neben dem Polyamidgranulat zusätzlich mindestens einen Sauerstoffabsorber zur Vermeidung oder Reduzierung der Vergilbung von aus dem Granulat hergestellten Formkörpern.

Der Behälter weist eine Barrierewirkung gegenüber Sauerstoff und Feuchtigkeit auf, d.h. der Behälter ist im Wesentlichen gas- und feuchtigkeitsdicht, und ist vorzugsweise ausgewählt aus der Gruppe bestehend aus Säcken, Beuteln, Big Bags, Boxen, Octabins, Fässern, Eimern, Kanistern, und Dosen. Der Behälter hat bevorzugt ein Fassungsvermögen von 1 bis 1000 kg Polyamidgranulat, besonders bevorzugt 5 bis 700 kg, ganz besonderes bevorzugt 15 bis 200 kg, insbesondere 18 bis 28 kg.

Durch die Barrierewirkung gegenüber Sauerstoff wird das Eindringen von zusätzlichem Sauerstoff aus der Umgebungsluft in den Behälter im Wesentlichen verhindert. Dazu enthält der Behälter mindestens eine Barriereschicht, die insbesondere ausgewählt ist aus der Gruppe bestehend aus Metall, Aluminium, Ethylen-Vinylalkohol-Copolymere (EVOH), Polyvinylidenchlorid (PVDC), Polyvinylchlorid (PVC) und Kombinationen davon.

Gegen das Eindringen von Feuchtigkeit enthält der Behälter ebenfalls eine Barriereschicht, die insbesondere ausgewählt ist aus der Gruppe bestehend aus Metall, Aluminium, Polyvinylidenchlorid (PVDC), Polyvinylchlorid (PVC), Polyolefinen, Polyethylen und Kombinationen davon.

Je nach Material, aus dem die Barriereschicht gebildet ist, kann diese sowohl gegen das Eindringen von Sauerstoff, als auch gegen das Eindringen von Feuchtigkeit wirksam sein.

Für Säcke wird beispielsweise ein Laminat mit einem Aufbau PE/PE/Alu/PE/PE und Schichtdicken von 100/25/7/25/100 μm verwendet.

Big Bags, Boxen und Octabins enthalten noch Inliner, die die Barrierewirkung gegenüber Sauerstoff und Feuchtigkeit bereitstellen. Fässer, Eimer, Kanister, und Dosen können Inliner enthalten, die die Barrierewirkung gegenüber Sauerstoff und Feuchtigkeit bereitstellen, sofern sie selbst nicht aus Metall gefertigt sind.

Besonders bevorzugt wird die Barrierewirkung durch eine oder mehrere Schichten aus Aluminium sichergestellt. Die Dicke der einzelnen Aluminiumschicht beträgt dabei 4 bis 15 μm.

Inliner sind Hüllen aus extrudierten oder laminierten Folien mit einer oder mehreren Schichten. Die Folien für Inliner können einfacher aufgebaut sein als Folien für Säcke oder Beutel selbst, da die mechanische Festigkeit bei Verpackungen mit Inlinern durch die Umverpackung, z.B. Box, Octabin oder Fass, bereits gewährleistet ist.

Säcke oder Beutel können einschichtige oder mehrschichtige Inliner ohne Barrierewirkung gegenüber Sauerstoff zur Verbesserung der mechanischen Eigenschaften der Verpackung, insbesondere der Zähigkeit bzw. Durchstossfestigkeit, enthalten.

Hinsichtlich der Art und Weise wie der Sauerstoffabsorber in der Verpackung platziert wird bestehen keine Einschränkungen. Es ist nur Sicherzustellen, dass der Sauerstoffabsorber nicht zusammen mit dem Polyamidgranulat verarbeitet wird. Sofern der Sauerstoffabsorber in Form von Sachets zum Polyamidgranulat hinzugefügt wird, kann dies zum Beispiel durch Warnhinweise auf der Aussenseite der Verpackung erfolgen. Besonders wenn mehrere Sachets verwendet werden, können diese zur leichteren Entfernung vor der Granulatverarbeitung in einem Netz oder Käfig zusammengefast werden. Sachets, Netz oder Käfig können auch an der Innenseite der Verpackung mit Kontakt zur Restluft fixiert sein, zum Beispiel durch kleben, klammern oder nähen. In einer bevorzugten Ausführungsform sind die Sachets, Netze oder Käfige mit einem Fortsatz, z.B. einer Schnur oder Lasche zur leichtern Fixierung versehen. Mittels dieses Fortsatzes kann der Sauerstoffabsorber zum Beispiel während dem Siegeln des Sackes, Beutels oder Inliners an der Siegelnaht fixiert werden.

Der Sauerstoffabsorber kann auch in eine der innersten Schichten der Verpackung eingearbeitet werden, wobei die zwischen dem Polyamidgranulat und der Schicht mit dem Sauerstoffabsorber liegenden Schichten sauerstoffdurchlässig sein müssen. Bevorzugt wird der Sauerstoffabsorber in die innerste oder zweit-innerste Schicht eingearbeitet. Der Sauerstoffabsorber ist dabei bevorzugt ein oxidierbares Metallpulver oder ein oxidierbares Polymer.

Sofern es sich beim Sauerstoffabsorber um ein oxidierbares Polymer handelt, kann eine der innersten Schichten der Verpackung daraus gebildet sein, bevorzugt die innerste oder zweit-innerste Schicht. Sofern es sich beim oxidierbaren Polymer um ein Polyamid handelt wird es bevorzugt in die innerste oder zweit-innerste Schicht eingearbeitet oder diese Schicht daraus hergestellt. Besonders bevorzugt wird die zweit-innerste Schicht aus Polyamid hergestellt.

Es wird ebenso ein Polyamidgranulat beschrieben, das nach dem zuvor beschriebenen Verfahren gelagert oder transportiert wurde. Ein Polyamidgranulat, das nach diesem Verfahren für sechs Wochen bei 60 °C gelagert wurde, zeigte nach der Weiterverarbeitung zu 2 mm dicken Platten einen Yellow-Index, der mindestens 0,2, bevorzugt mindestens 0,7, besonders bevorzugt mindestens 1,3, ganz besonders bevorzugt mindestens 1,8 tiefer liegt, als der Yellow-Index einer identisch hergestellten 2 mm dicken Platte, die bei ansonsten gleichen Bedingungen ohne Zusatz eines Sauerstoffabsorbers gelagert und transportiert wurde.

Durchführung der Lagerungsversuche

Zur Lagerung wurden 35 cm x 53,5 cm grosse Beutel aus einem PET/Aluminium/PE-Laminat mit Schichtdicken von 12/9/100 μm, Lösemittelfrei kaschiert mit 2-Komponentenkleber verwendet (Lieferant: Vacopack H. Buchegger AG, Schweiz).

Ungelagertes Polyamidgranulat wurde zu Platten 60 x 60 x 2 mm verspritzt. Der Yellow Index dieser Platten ist der Yellow Index bei 0 h Lagerung. Angegeben ist der arithmetische Mittelwert der Messungen an 5 Platten.

In den Beutel wurden 2 kg des Polyamidgranulats eingewogen. Je nach Lagerungsversuch wurde ein Sachet Sauerstofabsorber S1 oder S2 in Beutel gegeben oder nicht. Die überstehende Restluft im Beutel wurde aus dem Beutel gepresst und der Beutel direkt oberhalb der Füllgrenze luftdicht verschweisst. Durch diese Komprimierung des Beutels vor dem Verschweissen befindet sich Restluft nur zwischen den einzelnen Granulaten.

Je ein Beutel mit und ohne Sauerstoffabsorber-Sachet wurde in einem Trockenofen bei 60 °C für zwei, vier oder sechs Wochen gelagert. Nach der Lagerung wurden die Beutel geöffnet, das Polyamidgranulat zu Platten 60 x 60 x 2 mm verspritzt und der Yellow Index dieser Platten gemessen. Angegeben ist der arithmetische Mittelwert der Messungen an 5 Platten.

Berechnung der Restluftmenge

Die Restluft-Menge wird aus der Einwaage, der Schüttdichte und der Dichte des Polyamidgranulats berechnet, und zwar nach der Formel (I):

$$(I) \quad \text{Restluft-Menge in ml} =$$

$$(\text{Einwaage in g } / \text{ Schüttdichte in g/ml}) - (\text{Einwaage in g } / \text{ Dichte in g/ml})$$

Bei nicht komprimierbaren Behältern ist natürlich auch das über dem Polyamidgranulat verbleibende, unbenützte Volumen des Behälters bei der Berechnung der Restluftmenge zu berücksichtigen.

Herstellung der Platten 60 x 60 x 2 mm

Die Platten wurden auf einer Spritzgussmaschine der Firma Arburg, Modell Allrounder 420 C 1000-250 hergestellt. Dabei wurden aufsteigende Zylindertemperaturen von 260 bis 300 °C verwendet. Die Formtemperatur betrug 80 bis 100 °C.

Die Platten wurden in trockenem Zustand verwendet; dazu wurden sie nach dem Spritzguss mindestens 48 h bei Raumtemperatur in trockener Umgebung, d.h. über Silicagel gelagert.

Im Rahmen dieser Anmeldung wurden folgende Messmethoden verwendet:
Relative Viskosität:

ISO 307
Granulat
0,5 g in 100 ml m-Kresol
Temperatur 20 °C
Berechnung der relativen Viskosität (RV) nach $RV = t/t_0$ in Anlehnung an Abschnitt 11 der Norm.

Glasübergangstemperatur (Tg), Schmelzwärme und Schmelzpunkt:

ISO 11357

Granulat

Die Differential Scanning Calorimetry (DSC) wurde mit einer Aufheiz- und Abkühlrate von 20 K/min durchgeführt. Beim Schmelzpunkt wird die Temperatur am Peakmaximum angegeben. Der Mittelpunkt des Glas-übergangsbereichs, welcher als Glasübergangstemperatur (Tg) angegeben wird, wurde nach der Methode "Half-step-height" ermittelt.

Yellow Index

ASTM E313
Platte 60 x 60 x 2 mm
Temperatur 23 °C

Anhand der nachfolgenden Beispiele soll der erfindungsgemäße Gegenstand näher erläutert werden, ohne diesen auf die hier gezeigten spezifischen Ausführungsformen einschränken zu wollen.

In Tabelle 1 sind die in den Beispielen und Vergleichsbeispielen verwendeten Materialien aufgeführt.

**Tabelle 1**

| Material | Beschreibung | Hersteller |
|---|---|---|
| Polyamid A1 | amorphes Polyamid MACM12 aus Bis(3-methyl-4-aminocyclohexyl)methan und Dodecandisäure<br>RV* 1,70 (gemessen mit 0,5 g in 100 ml m-Kresol bei 20 °C)<br>Glasübergangstemperatur 155 °C<br>Dichte 1,00 g/ml, Schüttdichte 0,630 g/ml | EMS-CHEMIE AG, Schweiz |
| Polyamid A2 | amorphes Polyamid 6I/6T/MACMI/MACMT/PACMI/PACMT/12 im Molverhältnis 39/39/7,1/7,1/2,5/2,5/2,8 aus 1,6-Hexandiamin, Bis(3-methyl-4-amino-cyclohexyl)methan, Bis(4-aminocyclohexyl)methan, Isophthalsäure, Terephthalsäure und Laurinlactam<br>RV* 1,62 (gemessen mit 0,5 g in 100 ml m-Kresol bei 20 °C)<br>Glasübergangstemperatur 159 °C<br>Dichte 1,15 g/ml, Schüttdichte 0,685 g/ml | EMS-CHEMIE AG, Schweiz |
| Polyamid A3 | mikrokristallines Polyamid MACM12/PACM12 aus Bis(3-methyl-4-amino-cyclohexyl)methan, Bis(4-amino-cyclohexyl)methan und 1,12-Dodecan-disäure<br>Molverhältnis MACM : PACM = 30 : 70<br>RV* 1,80 (gemessen mit 0,5 g in 100 ml m-Kresol bei 20 °C)<br>Glasübergangstemperatur 145 °C, Schmelzpunkt 237 °C<br>Dichte 1,02 g/ml, Schüttdichte 0,650 g/ml | EMS-CHEMIE AG, Schweiz |
| Polyamid A4 | amorphes Polyamid MACMI/MACMT/12 im Molverhältnis 38/38/24 aus Bis(3-methyl-4-amino-cyclohexyl)methan, Isophthalsäure, Terephthal-säure und Laurinlactam<br>RV* 1,53 (gemessen mit 0,5 g in 100 ml m-Kresol bei 20 °C)<br>Glasübergangstemperatur 190 °C<br>Dichte 1,06 g/ml, Schüttdichte 0,645 g/ml | EMS-CHEMIE AG, Schweiz |
| Polyamid A5 | amorphes Polyamid MACMI/12 im Molverhältnis 65/35 aus Bis(3-methyl-4-amino-cyclohexyl)methan, Isophthalsäure und Laurinlactam<br>RV* 1,56 (gemessen mit 0,5 g in 100 ml m-Kresol bei 20 °C)<br>Glasübergangstemperatur 160°C<br>Dichte 1,06 g/ml, Schüttdichte 0,645 g/ml | EMS-CHEMIE AG, Schweiz |
| Polyamid A6 | amorphes Polyamid 6I/6T aus Hexamethylendiamin, Isophthalsäure und Terephthalsäure<br>Molverhältnis Isophthalsäure : Terephthalsäure 67 : 33<br>RV* 1,54 (gemessen mit 0,5 g in 100 ml m-Kresol bei 20 °C)<br>Glasübergangstemperatur 125 °C<br>Dichte 1,18 g/ml, Schüttdichte 0,715 g/ml | EMS-CHEMIE AG, Schweiz |
| Sauerstoffabsorber S1 | Sachets mit Eisenpulver (ca. 3,1 g) und Zeolith (ca. 1,3 g) mit Natruimchloridbeschichtung<br>Grösse** der Eisenpartikel: 100 - 400 $\mu$m<br>Handelsname: Ageless ZPT-200 | Mitsubishi Gas Chemical Company Inc., Japan |
| Sauerstoffabsorber S2 | Sachets mit Eisenpulver (ca. 6,4 g) und Zeolith (ca. 4,2 g) mit Natruimchloridbeschichtung<br>Grösse** der Eisenpartikel: 100 - 400 $\mu$m<br>Handelsname: Ageless ZPT-500 | Mitsubishi Gas Chemical Company Inc., Japan |
| * RV relative Viskosität, gemessen an einer Lösung von 0,5 g Polyamid in 100 ml m-Kresol bei 20 °C<br>** Bestimmt mit Rasterelektronenmikroskopie | | |

Tabelle 2 zeigt einen Vergleich des Yellow-Index von Granulat aus Polyamid A1 bei unterschiedlicher Lagerungsdauer bei einer Temperatur von 60 °C. Das im erfindungsgemäßen Behälter gelagerte Granulat wird dabei mit identischen Granulaten verglichen, bei denen Behälter ohne Sauerstoffabsorber bei der Lagerung eingesetzt wurden.

**Tabelle 2**

| | Versuchsnummer | Einheit | Yellow Index* | | | |
|---|---|---|---|---|---|---|
| Lagerungsdauer | | h | 0 | 336 | 672 | 1008 |
| Granulat A1 ohne Sauerstoffabsorber | VB1 | - | 0.6 | 1.8 | 2.4 | 3.3 |
| Granulat A1 mit Sauerstoffabsorber S1 | B2 | - | | 0.6 | 1.0 | 1.2 |
| * gemessen an aus dem gelagerten Granulat hergestellten Platten 60 x 60 x 2 mm | | | | | | |

Tabelle 3 zeigt den Yellow-Index für ein Granulat aus Polyamid A2 bei unterschiedlicher Lagerungsdauer bei einer Temperatur von 60 °C. Das im erfindungsgemäßen Behälter gelagerte Granulat wird dabei mit identischen Granulaten verglichen, bei denen Behälter ohne Sauerstoffabsorber bei der Lagerung eingesetzt wurden.

**Tabelle 3**

| | Versuchsnummer | Einheit | Yellow Index* | | | |
|---|---|---|---|---|---|---|
| Lagerungsdauer | | h | 0 | 336 | 672 | 1008 |
| Granulat A2 ohne Sauerstoffabsorber | VB3 | - | 2.1 | 4.7 | 6.0 | 6.3 |
| Granulat A2 mit Sauerstoffabsorber S1 | B4 | - | | 3.0 | 3.7 | 4.4 |
| * gemessen an aus dem gelagerten Granulat hergestellten Platten 60 x 60 x 2 mm | | | | | | |

Tabelle 4 zeigt den Yellow-Index des Granulats aus Polyamid A3 bei unterschiedlicher Lagerungsdauer bei einer Temperatur von 60 °C. Das im erfindungsgemäßen Behälter gelagerte Granulat wird dabei mit identischen Granulaten verglichen, bei denen Behälter ohne Sauerstoffabsorber bei der Lagerung eingesetzt wurden.

**Tabelle 4**

| | Versuchsnummer | Einheit | Yellow Index* | | | |
|---|---|---|---|---|---|---|
| Lagerungsdauer | | h | 0 | 336 | 672 | 1008 |
| Granulat A3 ohne Sauerstoffabsorber | VB5 | - | 0.2 | 1.0 | 2.0 | 2.8 |
| Granulat A3 mit Sauerstoffabsorber S1 | B6 | - | | 0.3 | 0.3 | 1.0 |
| * gemessen an aus dem gelagerten Granulat hergestellten Platten 60 x 60 x 2 mm | | | | | | |

Die Restluft-Menge wurde nach Formel (I) für das Beispiel B6 mit dem mikrokristallinen Polyamidgranulat A3 (PA MACM12/PACM12 Molverhältnis 30 : 70) aus der Einwaage (2000 g), der Schüttdichte (0,650 g/ml) und der Dichte (1,02 g/ml) des Polyamidgranulats A3 zu 1116 ml berechnet. Im Beispiel B6 wurden somit pro Liter Restluft 49,7 mmol Eisen als Sauerstoffabsorber verwendet.

Tabelle 5 zeigt den Yellow-Index des Granulats aus Polyamid A4 bei unterschiedlicher Lagerungsdauer bei einer Temperatur von 60 °C. Das im erfindungsgemäßen Behälter gelagerte Granulat wird dabei mit identischen Granulaten verglichen, bei denen Behälter ohne Sauerstoffabsorber bei der Lagerung eingesetzt wurden.

**Tabelle 5**

| | Versuchsnummer | Einheit | Yellow Index* | | | |
|---|---|---|---|---|---|---|
| Lagerungsdauer | | h | 0 | 336 | 672 | 1008 |
| Granulat A4 ohne Sauerstoffabsorber | VB7 | - | 1.3 | 5.0 | 5.6 | 6.3 |
| Granulat A4 mit Sauerstoffabsorber S1 | B8 | - | | 3.1 | 3.6 | 3.6 |
| * gemessen an aus dem gelagerten Granulat hergestellten Platten 60 x 60 x 2 mm | | | | | | |

Tabelle 6 zeigt den Yellow-Index des Granulats aus Polyamid A5 bei unterschiedlicher Lagerungsdauer bei einer Temperatur von 60 °C. Das im erfindungsgemäßen Behälter gelagerte Granulat wird dabei mit identischen Granulaten verglichen, bei denen Behälter ohne Sauerstoffabsorber bei der Lagerung eingesetzt wurden.

**Tabelle 6**

|  | Versuchsnummer | Einheit |  | Yellow Index* | | |
|---|---|---|---|---|---|---|
| Lagerungsdauer |  | h | 0 | 336 | 672 | 1008 |
| Granulat A5 ohne Sauerstoffabsorber | VB9 | - | | 3.2 | 4.1 | 4.1 |
| Granulat A5 mit Sauerstoffabsorber S1 | B10 | - | 2.4 | 2.1 | 3.1 | 3.2 |
| Granulat A5 mit Sauerstoffabsorber S2 | B11 | - | | 1.2 | 2.3 | 2.8 |
| * gemessen an aus dem gelagerten Granulat hergestellten Platten 60 x 60 x 2 mm | | | | | | |

Die Restluft-Menge wurde nach Formel (I) für die Beispiele B10 und B11 mit dem amorphem Polyamidgranulat A5 (PA MACMI/12 Molverhältnis 65 : 35) zu 1214 ml berechnet. Im Beispiel B10 wurden somit pro Liter Restluft 45,7 mmol Eisen als Sauerstoffabsorber verwendet, im Beispiel B11 hingegen 94,4 mmol. Der Vergleich der Werte der Beispiele B10 und B11 belegt somit den Vorteil der Verwendung einer erhöhten Menge an Sauerstoffabsorber.

Tabelle 7 zeigt den Yellow-Index des Granulats aus Polyamid A6 bei unterschiedlicher Lagerungsdauer bei einer Temperatur von 60 °C. Das im erfindungsgemäßen Behälter gelagerte Granulat wird dabei mit identischen Granulaten verglichen, bei denen Behälter ohne Sauerstoffabsorber bei der Lagerung eingesetzt wurden.

**Tabelle 7**

|  | Versuchsnummer | Einheit |  | Yellow Index* | | |
|---|---|---|---|---|---|---|
| Lagerungsdauer |  | h | 0 | 336 | 672 | 1008 |
| Granulat A6 ohne Sauerstoffabsorber | VB12 | - | | 5.0 | 6.0 | 6.1 |
| Granulat A6 mit Sauerstoffabsorber S1 | B13 | - | 3.6 | 4.0 | 5,3 | 5.9 |
| Granulat A6 mit Sauerstoffabsorber S2 | B14 | - | | 3.6 | 5.2 | 5.3 |
| * gemessen an aus dem gelagerten Granulat hergestellten Platten 60 x 60 x 2 mm | | | | | | |

Die Tabellen 2 bis 7 zeigen, dass unabhängig vom gelagerten amorphen oder mikrokristallinen Polyamidgranulat durch Zusatz eines Sauerstoffabsorbers (S1 bzw. S2) auf Basis von Eisenpulver der Yellow Index der aus dem gelagerten Polyamidgranulat hergestellten Platten verringert wird. Dieser positive Effekt wird bei allen Lagerungsdauern (2, 4 bzw. 6 Wochen) festgestellt.

Die Tabellen 7 und 8 belegen beim Vergleich der Werte der Beispiele B10 und B11 bzw. B13 und B14 ausserdem den Vorteil der Verwendung einer erhöhten Menge Sauerstoffabsorber da S2 mehr Eisenpulver enthält als S1.

**Patentansprüche**

1. Verfahren zur Lagerung und zum Transport von Polyamidgranulat enthaltend mindestens ein amorphes oder mikrokristallines Polyamid unter Vermeidung oder Reduzierung der Vergilbung von aus dem Granulat hergestellten Formkörpern, bei dem das Polyamidgranulat in einem Behälter mit einer Barrierewirkung gegenüber Sauerstoff und Feuchtigkeit aufbewahrt wird, wobei in dem Behälter mindestens ein Sauerstoffabsorber bereitgestellt wird, der im Behälter eine im Wesentlichen sauerstofffreie Atmosphäre erzeugt, und wobei der Behälter mindestens eine Barriereschicht enthält.

2. Verfahren nach Anspruch 1,
   **dadurch gekennzeichnet, dass** der Sauerstoffabsorber mindestens eine oxidierbare Metallverbindung ausgewählt aus der Gruppe der oxidierbaren Metallpulver, oxidierbaren Metalloxiden, oxidierbaren Metallsalzen oder Mischungen hiervon enthält, wobei die Menge der oxidierbaren Metallverbindung im Behälter bevorzugt im Bereich von 20 bis 400 mmol pro Liter Restvolumen im Behälter liegt.

3. Verfahren nach einem der vorhergehenden Ansprüche,

**dadurch gekennzeichnet, dass** der Sauerstoffabsorber in Sachets abgefüllt wird, wobei die Sachets vorzugsweise aus Sauerstoff durchlässigen Materialien bestehen, insbesondere aus Papier, Polyolefinen, Stoff, Filterpapier, Textilmembranen, mit Löchern bzw. Mikroporen versehenen Materialien oder Kombinationen davon.

4.  Verfahren nach einem der vorhergehenden Ansprüche,
    **dadurch gekennzeichnet, dass** der Sauerstoffabsorber eine oxidierbare organische oder anorganische Verbindung oder ein Enzym ist.

5.  Verfahren nach einem der vorhergehenden Ansprüche,
    **dadurch gekennzeichnet, dass** der Sauerstoffabsorber ein oxidierbares Polymer ist, wobei das oxiderbare Polymer bevorzugt als eine der innersten Polymerschichten im Behälter angeordnet oder in eine der innersten Polymerschichten des Behälters eingearbeitet ist.

6.  Verfahren nach einem der vorhergehenden Ansprüche,
    **dadurch gekennzeichnet, dass** die mindestens eine Barriereschicht ausgewählt ist aus der Gruppe bestehend aus Metall, Aluminium, Ethylen-Vinylalkohol-Copolymere (EVOH), Polyvinylidenchlorid (PVDC), Polyvinylchlorid (PVC), Polyolefinen, Polyethylen und Kombinationen davon.

7.  Verfahren nach einem der vorhergehenden Ansprüche,
    **dadurch gekennzeichnet, dass** das amorphe oder mikrokristalline Polyamid aus mindestens einem Diamin und mindestens einer Dicarbonsäure und gegebenenfalls aus mindestens einem Lactam gebildet ist.

8.  Verfahren nach einem der vorhergehenden Ansprüche,
    **dadurch gekennzeichnet, dass** das amorphe oder mikrokristalline Polyamid aus mindestens einem Diamin und mindestens einer Dicarbonsäure und gegebenenfalls aus mindestens einem Lactam gebildet ist und mindestens ein cycloaliphatisches Diamin oder mindestens ein aliphatisches Diamin mit einem aromatischen Strukturbestandteil oder mindestens eine aromatische Dicarbonsäure enthält .

9.  Verfahren nach Anspruch 8,
    **dadurch gekennzeichnet, dass** das mindestens eine cycloaliphatische Diamin oder dass mindestens eine aliphatische Diamin mit einem aromatischen Strukturbestandteil ausgewählt ist aus der Gruppe bestehend aus Bis(aminocyclohexyl)methan und seinen Alkylderivaten, Bis(aminocyclohexyl)propan und seinen Alkylderivaten, Isophorondiamin, Norbornandiamin, Bis(aminomethyl)norbornan, Xylylendiamin, Cyclohexandiamin, Bis(aminomethyl) cyclohexan und seinen Alkylderivaten.

10. Verfahren nach einem der vorhergehenden Ansprüche,
    **dadurch gekennzeichnet, dass** das Polyamidgranulat mindestens ein amorphes oder mikrokristallines Polyamid oder Mischungen von mindestens einem amorphen oder mikrokristallinen Polyamid mit mindestens einem teilkristallinen Polyamid und/oder mit mindestens einem Schlagzähmodifikator enthält.

**Claims**

1.  Method for storage and for transport of polyamide granulate, comprising at least one amorphous or microcrystalline polyamide, whilst avoiding or reducing yellowing of moulded articles produced from the granulate, in which method the polyamide granulate is kept in a container with a barrier effect relative to oxygen and moisture, at least one oxygen absorber being provided in the container and producing an essentially oxygen-free atmosphere in the container, and wherein the container comprises at least one barrier layer.

2.  Method according to claim 1,
    **characterised in that** the oxygen absorber comprises at least one oxidisable metal compound selected from the group of oxidisable metal powders, oxidisable metal oxides, oxidisable metal salts or mixtures hereof, the quantity of oxidisable metal compound in the container being preferably in the range of 20 to 400 mmol per litre of residual volume in the container.

3.  Method according to one of the preceding claims,
    **characterised in that** the oxygen absorber is filled into sachets, the sachets consisting preferably of oxygen-permeable materials, in particular made of paper, polyolefins, material, filter paper, textile membranes, materials provided with holes or micropores or combinations thereof.

4. Method according to one of the preceding claims,
**characterised in that** the oxygen absorber is an oxidisable organic or inorganic compound or an enzyme.

5. Method according to one of the preceding claims,
**characterised in that** the oxygen absorber is an oxidisable polymer, the oxidisable polymer being disposed preferably as one of the innermost polymer layers in the container or being incorporated in one of the innermost polymer layers of the container.

6. Method according to one of the preceding claims,
**characterised in that** the at least one barrier layer is selected from the group consisting of metal, aluminium, ethylene-vinyl alcohol copolymers (EVOH), polyvinylidene chloride (PVDC), polyvinyl chloride (PVC), polyolefins, polyethylene and combinations thereof.

7. Method according to one of the preceding claims,
**characterised in that** the amorphous or microcrystalline polyamide is formed from at least one diamine and at least one dicarboxylic acid and possibly from at least one lactam.

8. Method according to one of the preceding claims,
**characterised in that** the amorphous or microcrystalline polyamide is formed from at least one diamine and at least one dicarboxylic acid and possibly from at least one lactam, and comprises at least one cycloaliphatic diamine or at least one aliphatic diamine with an aromatic structural component, or at least one aromatic dicarboxylic acid.

9. Method according to claim 8,
**characterised in that** the at least one cycloaliphatic diamine or the at least one aliphatic diamine with an aromatic structural component is selected from the group consisting of bis(aminocyclohexyl)methane and the alkyl derivatives thereof, bis(aminocyclohexyl)propane and the alkyl derivatives thereof, isophorone diamine, norbornane diamine, bis(aminomethyl)norbornane, xylylene diamine, cyclohexane diamine, bis(aminomethyl)cyclohexane and the alkyl derivatives thereof.

10. Method according to one of the preceding claims,
**characterised in that** the polyamide granulate comprises at least one amorphous or microcrystalline polyamide or mixtures of at least one amorphous or microcrystalline polyamide with at least one partially crystalline polyamide and/or with at least one impact modifier.

**Revendications**

1. Procédé de stockage et de transport de granulés de polyamide contenant au moins un polyamide amorphe ou microcristallin en évitant ou en réduisant le jaunissement de corps moulés fabriqués à partir des granulés, selon lequel les granulés de polyamide sont conservés dans un récipient avec un effet barrière vis-à-vis de l'oxygène et de l'humidité, dans lequel au moins un absorbeur d'oxygène est mis à disposition dans le récipient, qui produit dans le récipient une atmosphère sensiblement exempte d'oxygène, et dans lequel le récipient contient au moins une couche barrière.

2. Procédé selon la revendication 1,
**caractérisé en ce que** l'absorbeur d'oxygène contient au moins un composé métallique oxydable choisi dans le groupe des poudres métalliques oxydables, des oxydes métalliques oxydables, des sels métalliques oxydables ou des mélanges de ceux-ci, dans lequel la quantité du composé métallique oxydable dans le récipient est de préférence dans la plage de 20 à 400 mmoles par litre de volume résiduel dans le récipient.

3. Procédé selon l'une quelconque des revendications précédentes,
**caractérisé en ce que** l'absorbeur d'oxygène est conditionné dans des sachets, dans lequel les sachets sont de préférence constitués de matériaux perméables à l'oxygène, en particulier de papier, de polyoléfines, de tissu, de papier filtre, de membranes textiles, de matériaux munis de trous ou de micropores ou de combinaisons de ceux-ci.

4. Procédé selon l'une quelconque des revendications précédentes,

**caractérisé en ce que** l'absorbeur d'oxygène est un composé organique ou inorganique oxydable ou une enzyme.

5. Procédé selon l'une quelconque des revendications précédentes,
**caractérisé en ce que** l'absorbeur d'oxygène est un polymère oxydable, dans lequel le polymère oxydable est de préférence disposé comme l'une des couches de polymère les plus internes dans le récipient ou incorporé dans l'une des couches de polymère les plus internes du récipient.

6. Procédé selon l'une quelconque des revendications précédentes,
**caractérisé en ce que** la au moins une couche barrière est choisie dans le groupe constitué par le métal, l'aluminium, les copolymères éthylène-alcool vinylique (EVOH), le chlorure de polyvinylidène (PVDC), le chlorure de polyvinyle (PVC), les polyoléfines, le polyéthylène et leurs combinaisons.

7. Procédé selon l'une quelconque des revendications précédentes,
**caractérisé en ce que** le polyamide amorphe ou microcristallin est formé d'au moins une diamine et d'au moins un acide dicarboxy-lique et éventuellement d'au moins un lactame.

8. Procédé selon l'une quelconque des revendications précédentes,
**caractérisé en ce que** le polyamide amorphe ou microcristallin est formé d'au moins une diamine et d'au moins un acide dicarboxy-lique et éventuellement d'au moins un lactame et contient au moins une diamine cycloaliphatique ou au moins une diamine aliphatique avec un constituant structural aromatique ou au moins un acide dicarboxylique aromatique.

9. Procédé selon la revendication 8,
**caractérisé en ce que** la au moins une diamine cycloaliphatique ou que la au moins une diamine aliphatique avec un constituant structural aromatique est choisie dans le groupe constitué par le bis(amino-cyclohexyl)méthane et ses dérivés alkylés, le bis(aminocyclohexyl)propane et ses dérivés alkylés, l'isophoronediamine, la norbornanedia-mine, le bis(aminométhyl)norbornane, la xylylènediamine, la cyclo-hexanediamine, le bis(aminométhyl)cyclohexane et ses dérivés alkylés.

10. Procédé selon l'une quelconque des revendications précédentes,
**caractérisé en ce que** le granulé de polyamide contient au moins un polyamide amorphe ou microcristallin ou des mélanges d'au moins un polyamide amorphe ou microcristallin avec au moins un polyamide semi-cristallin et/ou avec au moins un agent modifiant la résistance au choc.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0864630 A1
- EP 1347007 A1
- EP 1186552 A1
- US 5977212 A